# EUROPEAN PATENT SPECIFICATION

(11) **EP 3 135 465 B1**
(45) Date of publication and mention of the grant of the patent: **15.12.2021**
(21) Application number: 15783251.0
(22) Date of filing: 21.04.2015
(51) Int. Cl.: B60C 9/00, B60C 9/20, B60C 9/02, B60C 11/03, B29D 30/16, B60C 9/22

(54) **PNEUMATIC TIRE, AND PNEUMATIC TIRE PRODUCTION METHOD**
LUFTREIFEN UND VERFAHREN ZUR HERSTELLUNG EINES LUFTREIFENS
PNEUMATIQUE ET PROCÉDÉ DE PRODUCTION DE PNEUMATIQUE

(30) Priority: 22.04.2014 JP 2014088435; 01.05.2014 JP 2014094779
(43) Date of publication of application: 01.03.2017
(73) Proprietor: Sumitomo Rubber Industries, Ltd., Kobe-shi, Hyogo 651-0072 (JP)
(72) Inventor: MORI Koji, Kobe-shi Hyogo 651-0072 (JP)
(74) Representative: TBK
(86) International application number: PCT/JP2015/062129
(87) International publication number: WO 2015/163325

(56) References cited:
- EP-A1- 0 661 179
- EP-A1- 2 065 222
- WO-A1-2014/054403
- JP-A- H06 344 720
- JP-A- 2006 130 920
- JP-A- 2013 116 644
- JP-A- 2013 146 954
- None

## Description

The present invention relates to a pneumatic tire according to the preamble of claim 1, the features of which are known from document WO 2014/0544 03 A1, and a method for manufacturing a pneumatic tire according to the preamble of claim 8, the features of which are also known from document WO 2014/0544 03 A1, which is capable of suppressing reduction of durability when a band cord is made of high modulus organic fibers and when a belt layer is formed of a plurality of narrow rectangular ply pieces spaced from one another in a circumferential direction of the tire.

Pneumatic tires for high-speed traveling which include a structure having a band layer made of a band ply disposed radially outside a belt layer have been well known. The band ply is formed of a narrow ribbon shaped ply tape wound spirally in the circumferential direction of the tire. The band ply tape includes an arrangement body of a plurality of band cords covered with rubber. This structure increases restraint force with respect to the belt layer and improves high speed durability. Furthermore, the tread rigidity is increased to improve steering stability.

In recent years, it is desired to further improve high-speed durability and steering stability of tires due to developing high performance vehicles. Thus, it has been proposed to employ a high modulus organic fiber cord (hereinafter, simply referred to as "high modulus fiber cord") made of an aramid fiber, a polyethylene terephthalate fiber, a polyethylene naphthalate fiber and the like, as the band cords.

On the other hand, in order to improve uniformity of tires, a tire forming method using a rigid core (hereinafter, simply referred to as "core molding method") has been proposed. The rigid core includes an approximately same outer profile as an inner surface of a vulcanized tire. In the core molding method, tire components are sequentially arranged on the rigid core to form a green tire. The green tire is put in a vulcanization mold with the rigid core, and then is vulcanized in the cavity between the rigid core and the vulcanization mold without receiving substantial stretch. Document EP 0 661 179 A1 shows a tire with a helically-wound ribbon-strip shaped belt comprising a

hybrid cord. Moreover, D2 is particularly conceived to maintaining the tire's steering stability and a high speed running performance.

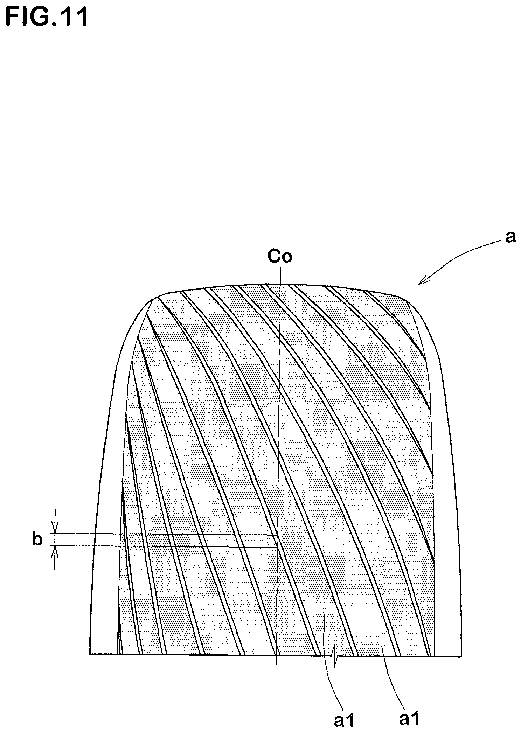

Document JP 2012-171183 A has proposed a method to form a belt layer in good precision in the core molding method. In this method, as illustrated in FIG. 11, the belt layer (a) is formed of a plurality of narrow rectangular ply pieces (al) spaced at gaps (b) from one another in a circumferential direction of the tire. Each of the rectangular ply pieces (al) includes an arrangement body of a plurality of belt cords covered with rubber.

Unfortunately, when a band ply is formed on the belt layer (a) in the radial direction of the tire, the band cords receive compressive strain locally at the respective locations of the gaps (b) upon grounding. Thus, when the above mentioned high modulus fiber cords are employed as the band cords, compression fatigue in band cords takes place at the locations of the gaps (b). As a result, the new problem that reduces the durability of the tire has been brought to the surface since one or more band cords tend to break off easily.

Therefore, it is the object of the present invention to provide a pneumatic tire and a method for manufacturing a pneumatic tire which is capable of suppressing breakage damage in a band cord when the band cord is made of high-modulus organic fibers and when a belt layer is formed of a plurality of narrow rectangular ply pieces spaced from one another in the circumferential direction of the tire.
The object of the invention is achieved by a pneumatic tire according to claim 1 and a method according to claim 8, respectively. Advantageous embodiments are carried out according to the dependent claims.

The invention provides a pneumatic tire including a carcass extending between bead portions through a tread portion and sidewall portions, a belt layer including a belt ply disposed radially outward of the carcass in the tread portion and a band layer including a band ply disposed radially outward of the belt layer. The belt ply is formed of a plurality of narrow rectangular ply pieces spaced from one another in a circumferential direction of the tire. Each of the rectangular ply pieces has a certain length and includes an arrangement body of a plurality of belt cords covered with rubber. The band ply is formed of a narrow ribbon shaped ply tape which is wound spirally in the circumferential direction of the tire. The ply tape includes at least one band cord covered with rubber. The band cord includes a composite cord that includes a first strand and a second strand which are twisted together, wherein the first strand is made of high modulus organic fibers and the second strand is made of low modulus organic fibers and is finer than the first strand.

The invention also provides a method for manufacturing a pneumatic tire which includes a carcass extending between bead portions through a tread portion and sidewall portions, a belt layer including a belt ply disposed radially outward of the carcass in the tread portion and a band layer including a band ply disposed radially outward of the belt layer. The method includes a belt ply forming step to form a belt ply by arranging a plurality of narrow rectangular ply pieces spaced from one another in a circumferential direction of the tire on a former, wherein each of the rectangular ply pieces has a certain length and includes an arrangement body of a plurality of belt cords covered with rubber, and a band ply forming step to form a band ply by spirally winding a narrow ribbon shaped ply tape including at least one band cord covered with rubber in the circumferential direction of the tire on the belt ply, wherein the band cord includes a composite cord that includes a first strand and a second strand which are twisted together. The first strand is made of high modulus organic fibers and the second strand is made of low modulus organic fibers, and is finer than the first strand.

In the present invention, the belt ply is formed of a plurality of narrow rectangular ply pieces spaced from one another in the circumferential direction of the tire.

Thus, the same as the case of patent literature 1, it is unnecessary to stitch down the ply component, which has wound in a single turn, to form a belt ply. Consequently, distortion such as wrinkles and wavy shaped deformation due to the stitch down process can be suppressed. Furthermore, since circumferentially adjacent rectangular ply pieces are spaced from one another, a step-shaped overlapping thereof can be excluded. Therefore, non-uniformity of rigidity attributable to the overlapping is also suppressed, and that can achieve an improvement in uniformity coupled with the reduction of strain.

However, when a band ply is disposed on the above mentioned belt ply structure, a certain problem that a band cord receives compressive strain at the respective locations of the gaps between rectangular ply pieces would be brought to the surface. Regarding the compressive strain, there are not problems in particular when the band cord is made of a low modulus fiber cord such as a nylon cord and the like. On the other hand, when a high modulus organic fiber cord is used, compression fatigue damage in the band cord takes place at the locations of the gaps since a high modulus organic fiber cord has poor compression fatigue resistance. As a result, the problem that reduces the tire durability has been brought since the band cord tends to break off easily.

In the present invention, a composite cord that includes a first strand and a second strand which are twisted together is employed as the band cord, wherein the first strand is made of high modulus organic fibers and the second strand is made of low modulus organic fibers. Thus, it is possible to suppress breakage damage in band cords due to compressive fatigue. The mechanism is estimated as follows. For example, in case of a high modulus fiber cord that includes only first strands twisted together, friction between filaments of the strands is increased due to the compressive strain, and then fretting damage in filaments takes place, thereby reducing the strength of the cord. On the other hand, by adding the second strand, it is estimated that the fretting damage can be moderated to prevent the strength of the cord from reducing. This effect can also be obtained using a combination that includes one second strand and a plurality of first strands.

The second strand has a finer diameter than the first strand since the second strand is used for suppressing the fretting damage,

### Brief Description of Drawings

FIG. 1 is a cross-sectional view of a pneumatic tire in accordance with an embodiment of the present invention.
FIG. 2 is an enlarged cross-sectional view of a tread portion illustrating the placement of band cords.
FIG. 3 is a cross-sectional view of a tire profile at a high speed traveling.
FIG. 4 is a cross-sectional view illustrating a green tire forming step.
FIGS. 5A to 5D are conceptual views illustrating a carcass ply forming step.
FIGS. 6A to 6C are conceptual views illustrating a belt ply forming step.
FIGS. 7A to 7C are conceptual views illustrating a band ply forming step.
FIG. 8 is a perspective view illustrating a composite cord.
FIG. 9 is a cross-sectional view illustrating a vulcanization step.
FIGS. 10A and 10B are conceptual views for explaining another manufacturing method of the present invention.
FIG. 11 is a perspective view of an embodiment of a conventional belt ply.
FIG. 12 is a conceptual view for explaining a compression fatigue test.

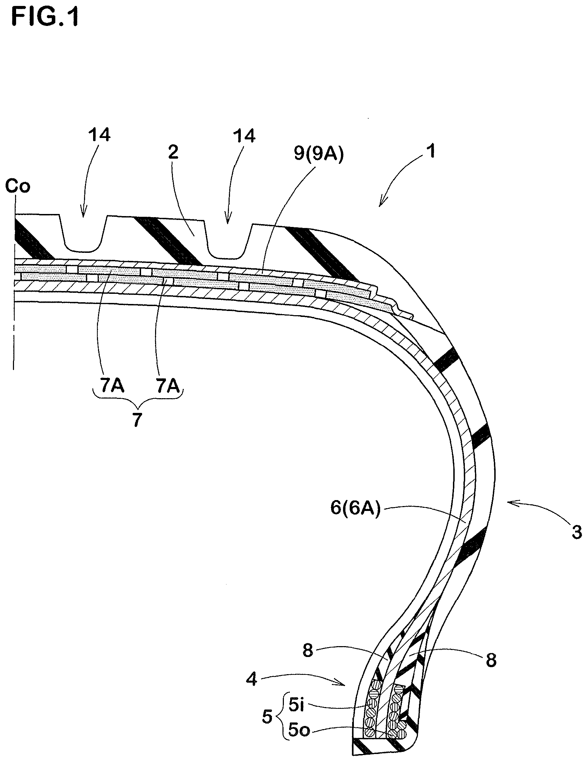

Hereinafter, an embodiment of the present invention will be described in detail. As illustrated in FIG. 1, the pneumatic tire 1 in accordance with the present embodiment includes a carcass 6 extending between bead portions 4 through a tread portion 2 and sidewall portions 3, a belt layer 7 disposed radially outward of the carcass 6 in the tread portion 2 and a band layer 9 disposed radially outward of the belt layer 7. The pneumatic tire 1 according to the present embodiment, for example, may preferably be embodied as for passenger cars.

The carcass 6 includes at least one carcass ply 6A of radially arranged carcass cords. In this embodiment, a single carcass ply 6A is employed. The carcass ply 6A has a toroidal shape extending between the bead portions 4 and 4. In this embodiment, the both ends of the carcass ply 6A terminate within bead cores 5 without being turned up around a respective one of the bead cores 5. Specifically, each of the bead cores 5 includes an axially inner core piece 5i and an outer core piece 5o. Each end of the carcass ply 6A is firmly sandwiched between the inner core piece 5i and the outer core piece 5o.

The inner core piece 5i and the outer core piece 5o are formed by spirally winding a non-extensible bead wire in a swirl manner in the circumferential direction of the tire. By adjusting the total winding number of the bead wire, it effectively suppresses that the carcass ply 6A is pulled up from the bead cores. In FIGS., the reference number "8" is a bead apex rubber that is made of a hard rubber composition having rubber hardness of from 80 to 100 degrees, for example. The bead apex rubber 8 extends radially outwardly in a tapered manner from each bead core piece 5i and 5o and may enhance the bead rigidity. In this description, "rubber hardness" is a type-A durometer hardness according to JIS-K6253 in an environment at 23 deg. C.

The belt layer 7, for example, includes at least one belt ply of steel belt cords laid at an angle of from 10 to 35 degrees with respect to the circumferential direction of the tire. In this embodiment, two belt plies 7A and 7B are employed. The two belt plies 7A and 7B are overlapped with each other so that each belt cord of plies is crossed. Thus, the bending rigidity of the tread portion 2 may be enhanced over the entire width by hoop effect of the belt layer 7.

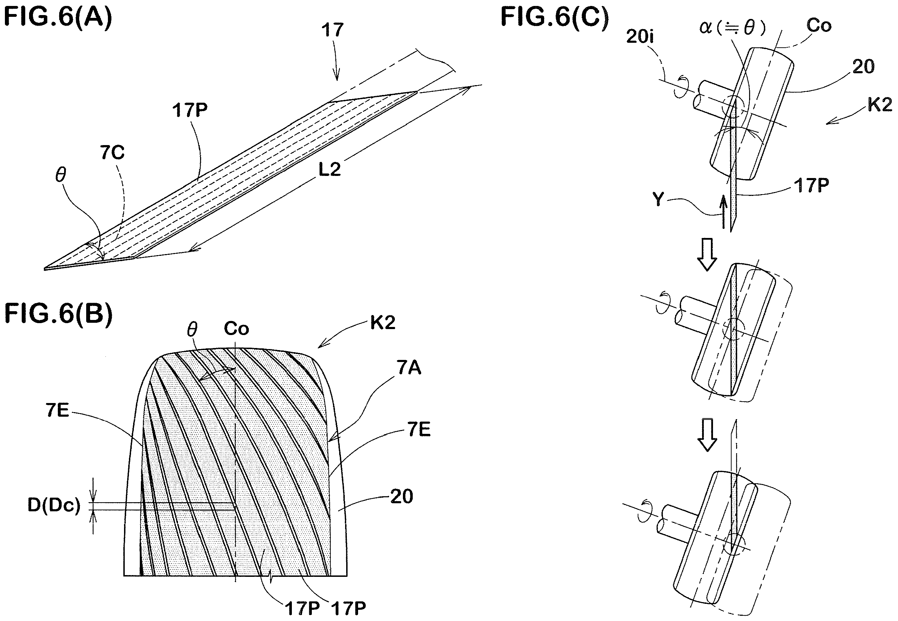

As illustrated in FIGS. 6A and 6B, the belt ply 7A is formed of a plurality of narrow rectangular ply pieces 17P which has a certain length L2 and which includes an arrangement body of a plurality of belt cords 7C covered with rubber. Each of the rectangular ply pieces 17P, for example, is formed by cutting off a narrow long ply tape 17 to the length L2 at a bias angle θ of from 10 to 35 degrees. Consequently, the ply tape 17 includes an arrangement body of a plurality of belt cords 7C extending in the longitudinal direction covered with a topping rubber.

The rectangular ply pieces 17P are spaced at gaps (D) in the circumferential direction of the tire from one another so that the belt cords 7C are oriented at an angle with respect to the circumferential direction of the tire same as the angle θ. Consequently, the belt ply 7A is formed. The gaps (D) decrease gradually from a side of the tire equator (Co) toward the belt edge 7E. Thus, the circumferential length difference of the belt ply at the locations between the tire equator (Co) and one of the belt edges 7E is adjusted so as to prevent the belt ply from being generated distortion such as wrinkles and wavy deformation. Furthermore, since circumferentially adjacent rectangular ply pieces 17P are not overlapped with one another, non-uniformity of rigidity attributable to the overlapping thereof is also suppressed. Consequently, it can achieve improvement in uniformity. Note that the gaps (D) may be set to zero at the belt edge 7E.

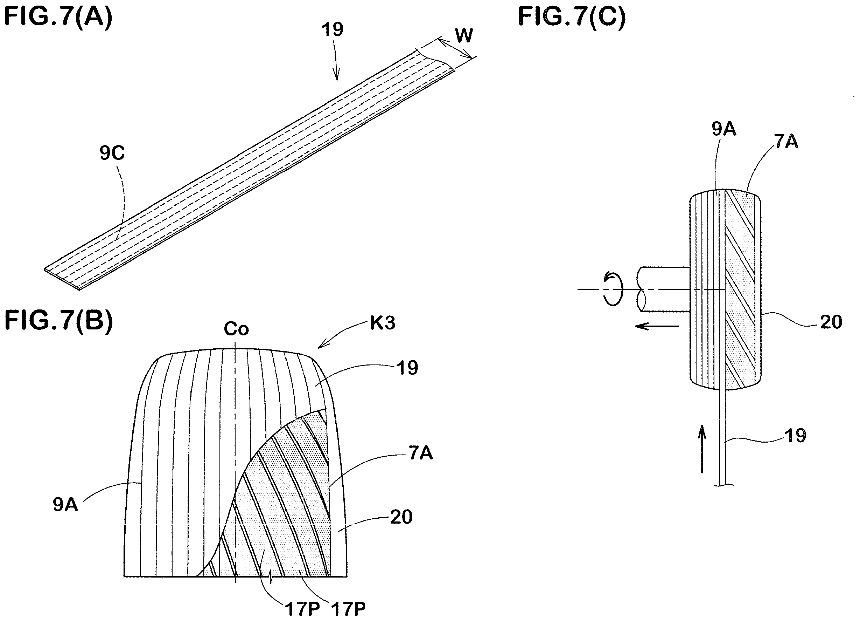

The band layer 9 is formed of at least one band ply 9A that covers the belt layer 7 over the substantially entire width. In this embodiment, a single band ply 9A is employed. As illustrated in FIGS. 7A and 7B, the band ply 9A is formed of a narrow ribbon shaped ply tape 19 which is wound spirally in the circumferential direction of the tire. The ply tape 19 includes at least one band cord 9C or its arrangement body covered with a topping rubber.

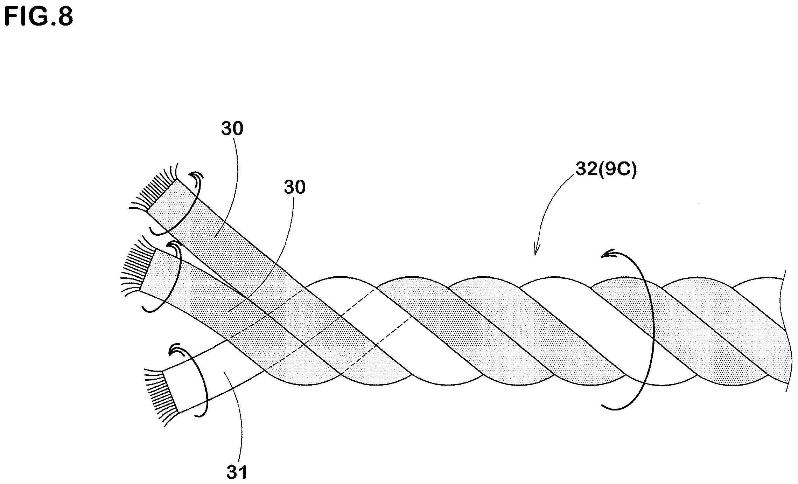

As illustrated in FIG. 8, the band cord 9C is formed of a composite cord 32 that includes a first strand 30 made of a high modulus organic fiber and a second strand made of low modulus organic fibers, and which are twisted together. The second strand 31 is finer than the first strand 30.

In view of increasing restraint force to the belt layer 7, it is preferable that a plurality of first strands 30 (e.g., two first strands) and a single second strand 31 are twisted together with each other, as this embodiment.

Here, when the belt ply 7A is configured as the above structure, the band cord 9C receives compressive strain locally at the respective locations of the gaps (D) when the tire rolls into the ground. Thus, when a conventional high modulus fiber cord which includes only the first strands twisted together with each other is employed as the band cord 9C, compression fatigue in the band cord takes place at the locations of the gaps (b), and then the band cord tends to break off easily.

On the other hand, when the composite cord 32 is employed as the band cord, it is possible to suppress breakage damage in the band cord due to compressive fatigue since it includes the second strand 31.

Table 1 shows that results of experiment for compressive fatigue test conducted by the inventors using the composite cord 32 and a non-composite cord. The composite cord 32 in accordance with the present invention is the cord that includes two first strand 30 made of aramid fibers and a single second strand 31 made of nylon fibers, and which are twisted together. The non-composite cord in accordance with a conventional high modulus fiber cord that includes only two first strands 30 made of aramid fibers which are twisted together. As shown in Table 1, the strength retention rate of the non-composite cord after the compressive fatigue test is low, and is about 15%. On the other hand, the composite cord 32 has the strength retention rate of 30%, and is thus understood that the compressive fatigue resistance has been improved.

**[Table 1]**

| | | Composite cord | Non-composite cord |
|---|---|---|---|
| First strand(s) Number | | 1670 dtex (aramid) 2 | 1670 dtex (aramid) 2 |
| Second strand(s) Number | | 940 dtex (nylon) 1 | - 0 |
| Twisting number (turns /10cm) | | | |
| | Primary twisting / final twisting | 28/25 | 30/30 |
| Cord fineness (mm) | | 0.83 | 0.72 |
| Intermediate elongation (@66N) | | 1.5% | 1.0% |
| Cord strength (N) | | | |
| | Non-used condition | 574 | 538 |
| | After compressive fatigue test | 170 | 80 |
| | Strength retention rate | 30% | 15% |

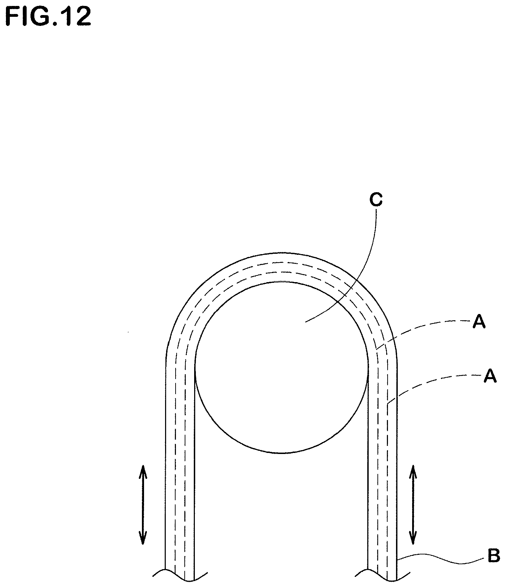

The compressive fatigue test was conducted in the following manner. As illustrated in FIG. 12, a rubber sheet (B) reinforced by two layers of sample cords (A) was prepared. Each layer had the same cord number (ends number) of sample cords (A). Then, compressive strain was given to the inner layer of the sample cords (A) repeatedly for two hours in such a manner that the rubber sheet wrapped around a cylindrical stick (C) was rubbed against the stick. As the test condition, a 45 mm stroke, a 340 N load and a 37,500 cycle were set.

The mechanism to improve the strength retention rate is estimated as follows. For example, in the case of a high modulus fiber cord that includes only first strands 30 twisted together, friction between filaments of the strands is increased due to the compressive strain, and then fretting damage in filaments takes place, thereby reducing the strength of the cord. On the other hand, by adding the second strand 31, it is estimated that the fretting damage can be moderated to prevent the strength of the cord from reducing. This effect can also be obtained using a combination that includes one second strand and a plurality of first strands (e.g., two first strands), as shown in Table 1.

Accordingly, the composite cord 32 with the high modulus first strand 30 can generate high restraint force to ensure excellent steering stability. Furthermore, tire durability including high-speed durability can be maintained in a high level by suppressing breakage damage of the band cord.

The second strand 31 is used to reduce the fretting damage. In view of improving restraint force by increasing the modulus of the composite cord 32 per unit fineness, it is preferable that the ratio of the second strand 31 wit respect to the composite cord 32 is as little as possible. Thus, the total fineness of one second strand 31 is preferably in a range of not more than 40% of the total fineness of one composite cord 32, more preferably not more than 25%. The lower limit of the total fineness of the composite cord 32 is preferably not less than 3000 dtex, more preferably not less than 3500 dtex, and the upper limit thereof is preferably not more than 6000 dtex, more preferably not more than 5500 dtex.

Regarding each of the strands 30 and 31, the primary twisting direction, the primary twisting number, the final twisting direction and the final twisting number are not particularly limited, but may be adjusted according to a conventional manner. In this embodiment, the primary twisting number N1 (turns /10 cm) of the first strands 30 and the primary twisting number N2 (turns / 10 cm) of the second strand 31 are in a range of from 24 to 32, for example. Furthermore, the final twisting number N2 (turn / 10 cm) of the respective first strands 30 and second strand 31 is in a range of from 20 to 40, for example.

When a plurality of first strand 30 and a single second strand 31 are twisted together, for example, an intermediate strand may be previously formed by twisting a plurality of first strand 30 together, and then the intermediate cord and the second strand 31 may be twisted together with each other to form the complete composite cord 32.

As the high modulus organic fibers for the first strands 30, aramid fibers, polyethylene terephthalate fibers and polyethylene naphthalate fibers can be employed, and preferably the aramid fibers having high modulus can be employed. As the low modulus organic fibers for the second strand 31, nylon fibers, polyester fibers and vinylon fibers can be employed, and preferably the nylon fibers having high wear resistance can be employed.

While, there is a limitation of the compressive fatigue resistance of the composite cord 32. Thus, when the gaps (D) of the rectangular ply pieces 17P and 17P are excessively large, it may be difficult to suppress the breakage damage sufficiently since the compressive strain itself becomes large. From results of an experiment by the inventor, in case of conventional high modulus fiber cords, the cords tend to break off when the gaps (d) exceed 0.4 mm. Consequently, in case of conventional high modulus fiber cords, it is necessary that the gaps (Dc) at the tire equator Co are set in a range of not more than 0.4 mm in order to prevent the breakage damage. However, it would be essentially impossible to form the belt ply 7A using rectangular ply pieces 17P in view of variation of characteristics in production. On the other hand, when the composite cord 32 is used, it is possible to expand the range of the gaps (Dc) up to 3.1 mm so that the belt ply 7A can be formed easily. Note that the gaps (Dc) are preferably not more than 2.2 mm.

Furthermore, the composite cord 32 preferably has an intermediate elongation of less than 3.0% before the cord is covered with the topping rubber. The intermediate elongation means elongation (%) at 66 N load on load-elongation curve of the cord obtained at room temperatures (25 degrees C. plus/minus 2 degrees C.), in accordance with the chemical fiber tire cord testing method of JIS L1017.

The composite cord 32 (band cord 9C) having low intermediate elongation can suppress elongation of the carcass 6 and the belt layer 7 at high speed traveling so as to suppress lifting of tread portion effectively. In order to further suppress the lifting of the tread portion 2, the intermediate elongation of the composite cord 32 is preferably in a range of not more than 2.0%, more preferably not more than 1.5%. Such a composite cord 32 (band cord 9C) having low intermediate elongation can be employed for the core molding method where the tire does not receive substantial stretch.

Preferably, the density of arrangement of the band cords 9C in a tire cross section may be optimized in order to effectively suppress the lifting of the tread portion 2 while suppressing increase of the tire mass. In view of this, the ply tape 19 is configured to have a width W1 of from 2 to 10 mm which is narrower than that of a conventional one, as illustrated in FIG. 7A. Such a narrow ply tape 19 can control the density of arrangement of the band cords 9C easily by adjusting its spiral winding pitches. Preferably, the width W1 is not more than 7 mm, more preferably not more than 6 mm in order to further improve the above advantageous effect. Note that the lower limit of the width is preferably not less than 3 mm, more preferably not less than 4 mm.

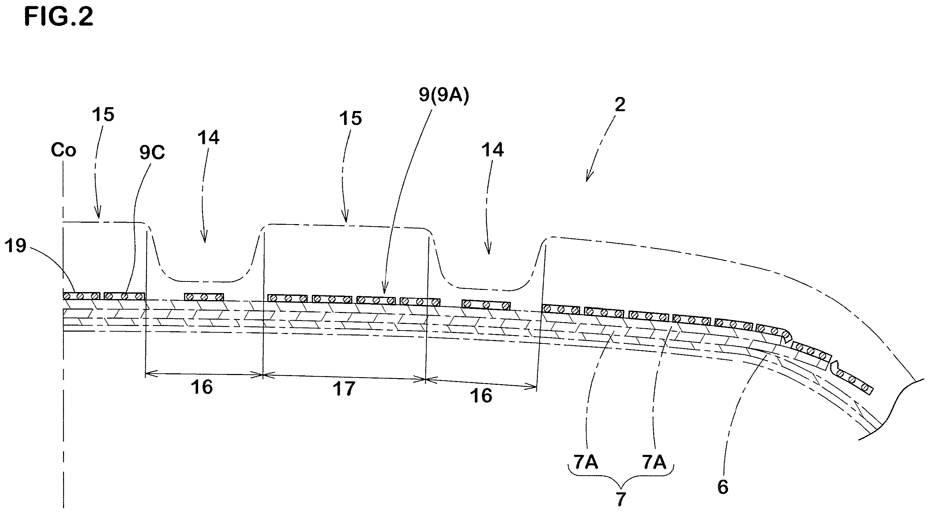

FIG. 2 illustrates an embodiment that optimizes the effect to suppress the lifting in such a manner that the density of arrangement of the band cords 9C is varied in the axial direction of the tire.

In this embodiment, the tread portion 2 is provided with circumferentially and continuously extending main grooves 14. In this case, regarding the amount of lifting in the radial direction, the groove regions provided with the main grooves 14 is less than the land portions 15 separated by the main grooves 14 since the groove regions have small mass that generates relatively small centrifugal force at high speed traveling. Thus, it is preferable that the density E1 of band cords 9C of each radially inner region 16 of each main groove 14 is smaller than the density E2 of the band cords 9C of each radially inner region 17 of each land portion 15. Consequently, since each region can lift uniformly, excellent high speed durability can be obtained. Note that the density E of band cords 9C of a region, for example, is calculated by dividing the number of the band cords 9C arranged in the concerned region by the axial width of the concerned region.

Preferably, the lower limit of the density ratio E1/E2 is equal to or more than zero, more preferably equal to or more than 0.2. Furthermore, the upper limit of the ratio is preferably equal to or less than 0.8, more preferably equal to or less than 0.6. By adjusting the density of band cords 9C, excellent high speed durability can be obtained while suppressing increase of tire mass.

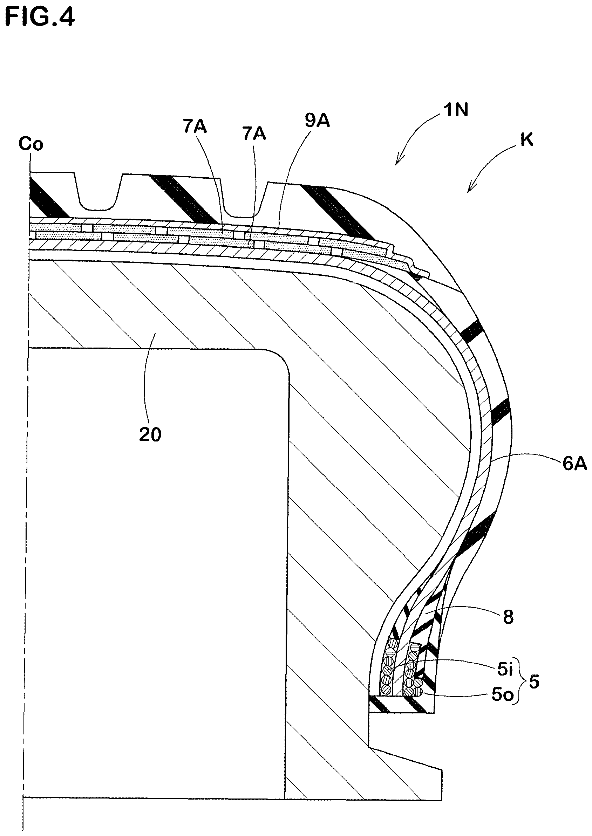

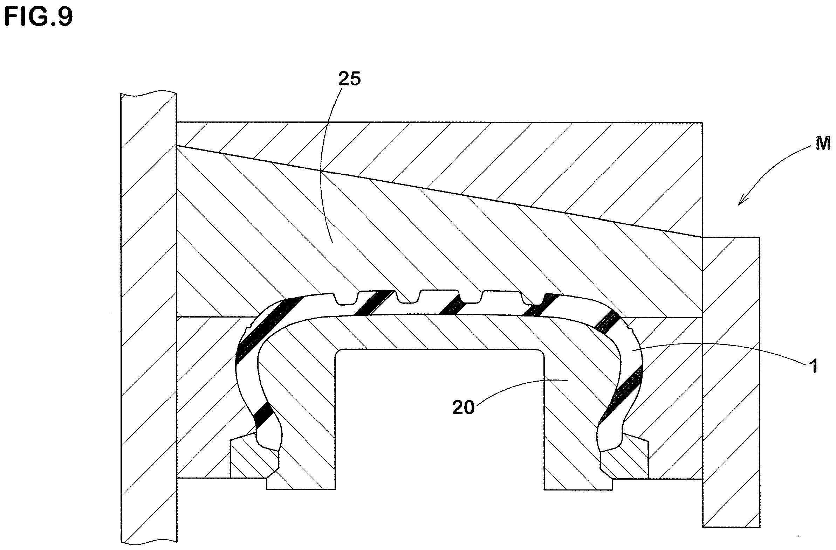

Next, a method for manufacturing the pneumatic tire 1 will be explained. As the manufacturing method, the core molding method is employed in the present embodiment. Specifically, it includes a green tire forming step (K) and a vulcanization step (M). In the green tire forming step (K), as illustrated in FIG. 4, tire components are sequentially arranged on a rigid core 20 to form a green tire IN that has a similar shape as the pneumatic tire 1 to be manufactured. In the vulcanization step (M), as illustrated in FIG. 9, the green tire IN is put in a vulcanization mold 25 together with the rigid core 20, and then is vulcanized in the cavity between the rigid core 20 and the vulcanization mold 25 without receiving substantial stretch.

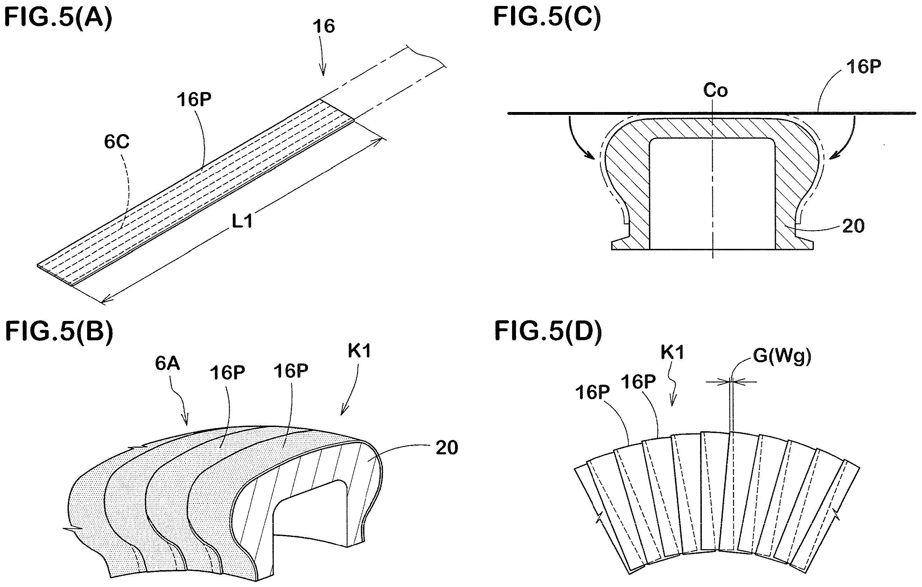

More specifically, the green tire forming step (K) includes a carcass ply forming step (K1), as illustrated in FIG. 5, to form the carcass ply 6A on the rigid core 20, a belt ply forming step (K2), as illustrated in FIG. 6, to form the belt ply 7A on the carcass ply 6A, and a band ply forming step (K3), as illustrated in FIG. 7 to form the band ply 9A on the belt ply 7A. In this embodiment, the rigid core 20 is used as a former 21, and thus the belt ply 7A is supposed to be formed on the former 21 through the carcass ply 6A.

In the carcass ply forming step (K1), as illustrated in FIG. 5A, a long narrow ply carcass tape 16 that includes an arrangement of a plurality of carcass cords arranged along the longitudinal direction of the tape covered with a topping rubber is used. By cutting off the carcass ply tape 16 to a certain length L1, narrow rectangular ply pieces 16P can be formed. The with narrow rectangular ply pieces 16P with the length L1 includes an arrangement body of carcass cord 6C covered with rubber.

As illustrated in FIGS. 5B and 5C, each of the rectangular ply pieces 16P is arranged on the rigid core 20 sequentially in the circumferential direction of the tire such that the carcass cords 6C are oriented at an angle of substantially zero with respect to the circumferential direction of the tire. Thus, the carcass ply 6A can be formed. This embodiment, as illustrated in FIG. 5D, exemplifies that circumferentially adjacent rectangular ply pieces 16P and 16P are arranged such that an overlapped portion G is provided. The carcass ply 6A can be adopted in different tire sizes by way of adjusting any one of the overlapping widths of adjacent plies at the tire equator or the number of the plies and the like.

As needed, a gap may be provided between a pair of circumferentially adjacent rectangular ply pieces 16P and 16P on the side of the tire equator Co. As the carcass cords 6C, conventional cords, e.g., polyester cord and the like can suitably be employed.

In the belt ply forming step K2, as illustrated in FIG. 6A, a narrow ribbon shaped belt ply tape 17 that includes an arrangement body of belt cords 7C extending in the longitudinal direction covered with rubber is employed. By cutting off the belt ply tape 17 sequentially to the length L2 at a bias angle θ of from 10 to 35 degrees, a plurality of rectangular ply pieces 17P having the length L2 can be formed. The rectangular ply pieces 17P includes an arrangement body of belt cords 7C covered with rubber.

As illustrated in FIG. 6B, each of the rectangular ply pieces is arranged on the rigid core 20 sequentially in the circumferential direction of the tire such that the belt cords 7C are oriented at an angle same as the angle θ with respect to the circumferential direction of the tire. Thus, the belt ply 7A can be formed. In this case, the respective rectangular ply pieces 17P are spaced at gaps (D) in the circumferential direction of the tire. The gaps (D) decrease gradually from a side of the tire equator (Co) toward both belt edges 7E. This may absorb the circumferential length difference of the belt ply at the locations between the tire equator (Co) and one of the belt edges 7E so that distortion such as wrinkles and wavy deformation are not generated. Furthermore, since circumferentially adjacent rectangular ply pieces 17P are not overlapped with one another, non-uniformity of rigidity attributable to the overlapping thereof is also suppressed. Consequently, it can achieve an improvement in uniformity. Note that the gaps (D) may be set to zero at the belt edges 7E.

As the method of pasting the rectangular ply pieces 17P, as illustrated in FIG. 6C, each of the rectangular ply pieces 17P may be arranged obliquely with respect to the circumferential direction at a lead angle α, which is substantially equal to the angle θ, on the rigid core 20 which is being moved along its center axis 20i while rotating around the center axis 20i. Specifically, each rectangular ply piece 17P is supplied at a constant speed along its longitudinal direction Y of the piece. Meanwhile, the rigid core 20 is positioned in such a manner that the core equator inclines at the angle α, which is equal to the angle θ, with respect to the longitudinal direction Y. Then, the rigid core 20 is supposed to be moved in parallel with the center axis direction at a constant speed V2 while rotating around the center axis 20i at a constant speed VI (circumferential speed) to wind the ply piece around it. Here, when the ratio V2/V1 is set equal to the value of "tan α", the rectangular ply pieces 17P can be arranged such that the longitudinal direction Y of the pieces inclines at the angle α with respect to the circumferential direction of the tire. Note that the ply pieces may be pasted by hands.

In the band ply forming step K3 in accordance with the present embodiment, as illustrated in FIG. 7A, a narrow ribbon shaped band ply tape 19 in which one band cord 9C or an arrangement body of band cords 9C arranged in the longitudinal direction is covered with a topping rubber is employed. As illustrated in FIGS. 7B and 7C, the ply tape is wound spirally in the circumferential direction of the tire on the belt ply 7A, thereby being formed the band ply 9A.

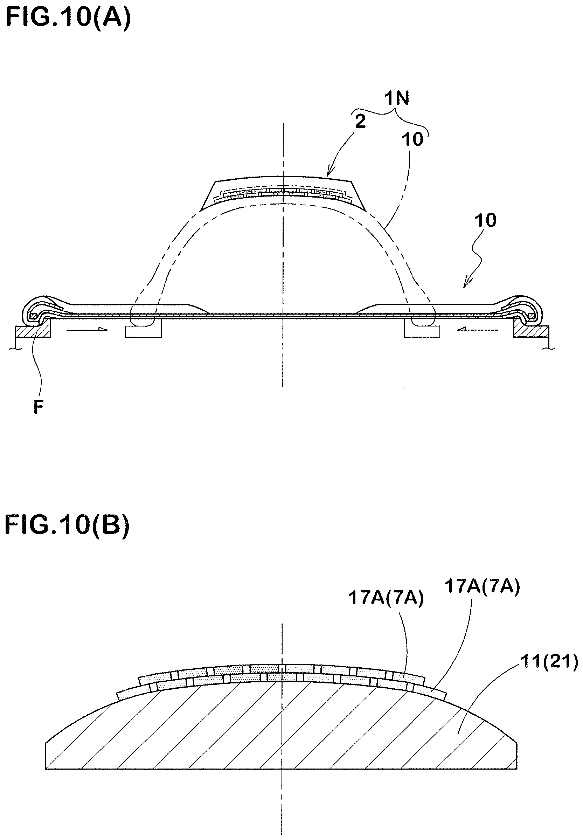

The method for manufacturing the pneumatic tire in accordance with the present invention is not limited to using the core molding method, but can employ a conventional method for forming a green tire IN in such a way that the tread portion 2 and a base tire 10 including the other portions except the tread portion are prepared separately, and then these components are combined with each other on a shaping drum F, for example, as schematically illustrated in FIG. 10A. In this case, as illustrated in FIG. 10B, the tread forming drum 11 is configured as the former 21, and the belt ply 7A is directly formed on the former 21.

While the particularly preferable embodiments in accordance with the present invention have been described in detail, the present invention is not limited to the illustrated embodiments, but can be modified and carried out in various aspects.

### Example

### (A)

Pneumatic tires (size: 245/45R18) with an internal structure illustrated in FIG. 1 were manufactured based on the method that includes the carcass ply forming step K1, the belt ply forming step K2 and the band ply forming step K3, as illustrated in FIGS. 5 to 7, according to

the details shown in Table 2. Then, steering stability and breakage resistance (durability) of band cords of each test tire was tested and compared with each other. The specifications are substantially the same except the parameters listed in Table 2. The common specifications of the carcass, the belt layer and the band layer are as follows:
Carcass
   Number of plies: two
   Carcass cords: 1100 dtex/2 (PET)
   Cord angles: 90 degrees
Belt layer
   Number of plies: two
   Belt cords: 1×3×0.27HT (steel)
   Cord angles: +20 deg. / -20 deg.
   Width W of rectangular ply pieces: 28 mm
   Gaps (Dc) between rectangular ply pieces: as shown in Table 2
Band layer
   Number of plies: one (covering the entire width of belt)
   Band cords: as shown in Table 1
   Width W1 of ply tape: 10 mm
   Density ratio E1/E2 of band cords: 1.00

Steering stability test:
Each test tire was mounted on a rim (18x8J) with an internal pressure (230 kPa), and then was installed to a Japanese FR vehicle with a displacement of 4,300cc, as all the wheels. Then, the test vehicle was made to run on a tire test course with a dry asphalt surface to evaluate the steering stability of the tire. The test results are indicated using an index based on Ref. 1 being 100. The larger the value, the better the performance is.

Breakage resistance of band cords (durability) test:
Using a drum tester, each test tire was run on the drum for 40,000 km at a speed of 60 km per hour under the conditions of a rim of 18x8J, an internal pressure of 80 kPa and a tire standard load. After running, the tire was analyzed into each portion and evaluated the breakage condition of band cords by naked eyes. The results are shown based on the number of breakages as follows:
S: No breakage,
A: One to five breakages,
B: Six to ten breakages, and
C: More than ten breakages.

Note that the number of breakages or conditions of the band cord is indicated in parentheses. Regarding the conditions, "sporadic" means that ten or more breakages occurred but which occurred less than 70% of locations with respect to the total number of gaps (D). Furthermore, "whole circumference" means that ten or more breakages occurred and which occurred equal to or more than 70% of locations with respect to the total number of gaps (D).

**[Table 2]**

| | Ref. 1 | Ref. 2 | Ref. 3 | Ref. 4 | Ref. 5 |
|---|---|---|---|---|---|
| Band cord | Non-composite cord listed in Table 1 | | | | |
| Gaps Dc of adjacent rectangular ply pieces (mm) | 0.4 | 1.3 | 2.2 | 3.1 | 4 |
| Steering stability | 100 | 100 | 100 | 100 | 100 |
| Durability | A (two portions) | B (six portions) | C (sporadic) | C (sporadic) | C (whole circumference) |

| | Ex. 1 | Ex. 2 | Ex. 3 | Ex. 4 | Ex. 5 |
|---|---|---|---|---|---|
| Band cord | Composite cord listed in Table 1 | | | | |
| Gaps Dc of adjacent rectangular ply pieces (mm) | 0.4 | 1.3 | 2.2 | 3.1 | 4 |
| Steering stability | 100 | 100 | 100 | 100 | 100 |
| Durability | S | S | S | A (three portions) | C (sporadic) |

As illustrated in Table 2, in case of the comparative examples, it is understood that the gaps (Dc) should be equal to or less than 1.3 mm in order to prevent the breakage damage. In contrast, in case of the examples, it is confirmed that the gaps (Dc) can be expanded up to about 3.1 mm since the compressive resistance of the band cords is improved.

### (B)

Pneumatic tires were manufactured by way of modifying only the band layers of the above mentioned tires based on the details shown in Table 3. Then, lifting amount of the land portions, high speed durability and tire mass were tested. The common specifications of the tires and the test methods are as follows:

Lifting amount of the land portions:
Each test tire was run on a drum tester at a speed of 250 km per hour under the conditions of a rim of 18x8J, an internal pressure of 230 kPa and a tire load of 5.0kN, and the lifting amounts with respect to static state of the center land portion, middle land portions and shoulder land portions were measured. The smaller the value, the better the high speed durability is.

High speed durability test:
Each test tire was run on a drum tester in conformity to the load/speed performance test regulated by ECE30 under the conditions of a rim of 18x8J, an internal pressure of 230kPa and a tire load of 5.0kN. Then, the traveling speeds were stepped up at 10 km per hour at intervals of 20 minutes to measure the speed (km/h) and time (min.) at the time the tire has been damaged. The higher the traveling speed and the longer the time, the better the high speed durability is.

Tire mass:
Each one test tire mass was measured. The results are shown using an index based on Ex. B1 being 100. The smaller the value, the lighter the tire mass is.

**[Table 3]**

| | | | Ex. B1 | Ex. B2 | Ex. B3 | Ex. B4 | Ex. B5 | Ex. B6 | Ex. B7 | Ex. B8 |
|---|---|---|---|---|---|---|---|---|---|---|
| < First strand(s) > | | | Aramid | | | | | | | |
| | Fineness D1 (dtex) | | 1100 | 1670 | | | | | | |
| | Number | | 1 | 2 | | | | | | |
| < Second strand(s) > | | | Nylon | | | | | | | |
| | Fineness D2 (dtex) | | 940 | | | | | | | |
| | Number | | 1 | | | | | | | |
| Primary twist numbers N1 and N2 (turns / 10cm) | | | 42, 30 | 28,28 | | | | | | |
| Final twist number N3 (turns /10cm | | | 41 | 25 | 22.5 | 27.5 | 30 | 32.5 | 25 | 25 |
| Intermediate elongation (%) | | | 5.2 | 1.5 | 1.0 | 2.0 | 2.5 | 2.8 | 1.5 | 1.5 |
| Width W1 of ply tape (mm) | | | 10 | 5 | | | | | 2 | 4 |
| Ratio E1/E2 of band cord densities | | | 1.00 | 0.40 | | | | | | |
| Amount of lifting of center land portion (mm) | | | 5.3 | 2.1 | 2.1 | 2.3 | 3.2 | 3.9 | 2.1 | 2.1 |
| Amount of lifting of middle land portions (mm) | | | 5.9 | 2.0 | 2.0 | 2.3 | 3.2 | 3.8 | 2.0 | 2.0 |
| Amount of lifting of shoulder land portions (mm) | | | 5.5 | 2.0 | 2.0 | 2.2 | 3.1 | 4.0 | 2.0 | 2.0 |
| High speed durability | | Speed (km/h) | 280 | 320 | 320 | 320 | 320 | 310 | 320 | 320 |
| | | Time (min.) | 10 | 12 | 17 | 5 | 2 | 13 | 12 | 12 |
| Tire mass (index) | | | 100 | 98 | 99 | 98 | 98 | 97 | 98 | 98 |

| | | | Ex. B9 | Ex. B10 | Ex. B11 | Ex. B12 | Ex. B13 | Ex. B14 | Ex. B15 | Ex. B16 |
|---|---|---|---|---|---|---|---|---|---|---|
| < First strand(s) > | | | Aramid | | | | | | | |
| | Fineness D1 (dtex) | | 1670 | | | | | | | |
| | Number | | 2 | | | | | | | |
| < Second strand(s) > | | | Nylon | | | | | | | |
| | Fineness D2 (dtex) | | 940 | | | | | | | |
| | Number | | 1 | | | | | | | |
| Primary twist numbers N1 and N2 (turns / 10cm) | | | 28,28 | | | | | | | |
| Final twist number N3 (turns / 10cm) | | | 25 | | | | | | | |
| Intermediate elongation (%) | | | 1.5 | | | | | | | |
| Width W1 of ply tape (mm) | | | 6 | 8 | 10 | 5 | | | | |
| Ratio E1/E2 of band cord densities | | | 0.40 | 0.72 | 1.00 | 0.20 | 0.40 | 0.60 | 0.80 | 1.00 |
| Amount of lifting of center land portion (mm) | | | 2.1 | | | | | | | |
| Amount of lifting of middle land portions (mm) | | | 2.0 | 2.3 | 2.5 | 2.0 | 2.0 | 2.2 | 2.3 | 2.5 |
| Amount of lifting of shoulder land portions (mm) | | | 2.0 | | | | | | | |
| High speed durability | | Speed (km/h) | 320 | | | | | | | |
| | | Time (min.) | 12 | 8 | 6 | 12 | 12 | 12 | 12 | 6 |
| Tire mass (index) | | | 98 | 98 | 98 | 98 | 98 | 99 | 100 | 98 |

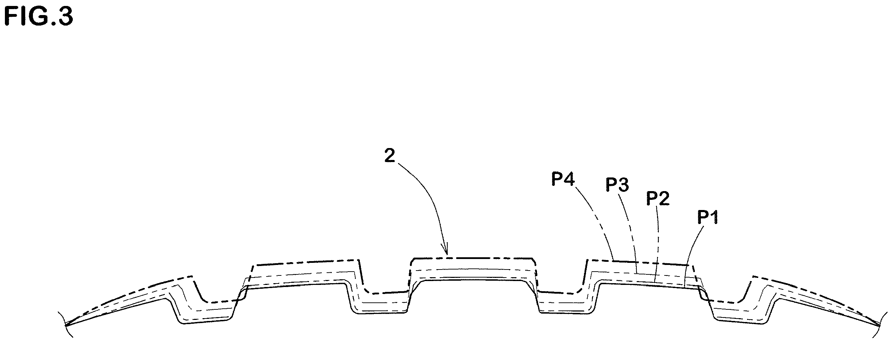

As shown in Table 3, it is confirmed that the pneumatic tires in accordance with the embodiment improve high speed durability while suppressing increase of tire mass. It is also confirmed that each land portion of the tire Ex. B2 was lifted up uniformly on the respective profiles P2, P3 and P4 at traveling speeds of 100 km/h, 180 km/h and 250 km/h, as illustrated in FIG. 3. Note that the profile P1 corresponds to the static state of the tire.

### Reference Signs List

- 1: Pneumatic tire
- 1A: green tire
- 2: Tread portion
- 3: Sidewall portion
- 4: Bead portion
- 6: Carcass
- 7: Belt layer
- 7A: Belt ply
- 7C: Belt cord
- 9: Band layer
- 9A: Band ply
- 9C: Band cord
- 17P: Rectangular ply piece
- 19: Ply tape
- 20: Rigid core
- 21: Former
- 25: Vulcanization mold
- 30: First strand
- 31: Second strand
- 32: Composite cord
- D: Gap
- K2: Belt ply forming step
- K3: Band ply forming step

## Claims

1. A pneumatic tire (1) comprising:
a carcass (6) extending between bead portions (4, 4) through a tread portion (2) and sidewall portions (3, 3), a belt layer (7) comprising a belt ply (7A) disposed radially outward of the carcass (6) in the tread portion (2) and a band layer (9) comprising a band ply (9A) disposed radially outward of the belt layer (7);
the belt ply (7A) being formed of a plurality of narrow rectangular ply pieces (17P) spaced from one another in a circumferential direction of the tire (1), each of the rectangular ply pieces (17P) having a certain length and comprising an arrangement body of a plurality of belt cords (7C) covered with rubber; and
the band ply (9A) being formed of a narrow ribbon shaped ply tape (19) wound spirally in the circumferential direction of the tire (1), the ply tape (19) comprising at least one band cord (9C) covered with rubber,
**characterized in that**
the band cord (9C) comprises a composite cord (32) that comprises a first strand (30) and a second strand (31) which are twisted together, wherein the first strand (30) is made of high modulus organic fibers, and wherein the second strand (31) is made of low modulus organic fibers and is finer than the first strand (30), wherein
as the high modulus organic fibers, aramid fibers, polyethylene terephthalate fibers and polyethylene naphthalate fibers can be employed, and
as the low modulus fibers, nylon fibers, polyester fibers and vinylon fibers can be employed, wherein
the tread portion (2) is provided with circumferentially and continuously extending main grooves (14) and a land portion (15) separated by the main grooves (14), and a band cord density of a radially inner region of the main grooves (14) is smaller than a band cord density of a radially inner region of the land portion (15).

2. The pneumatic tire (1) according to claim 1,
wherein the high modulus organic fibers are aramid fibers, and the low modulus organic fibers are nylon fibers.

3. The pneumatic tire (1) according to claim 1 or 2,
wherein the band cord (9C) consists of a plurality of first strands (30) and a single second strand (31).

4. The pneumatic tire (1) according to any one of claims 1 to 3, wherein the belt ply (7A) has gaps (Dc) equal to or less than 3.1 mm between circumferentially adjacent rectangular ply pieces (17P) at a tire equator.

5. The pneumatic tire (1) according to any one of claims 1 to 4, wherein the band cord (9C) has an intermediate elongation of less than 3.0%, the intermediate elongation meaning the elongation (%) at 66 N load on load-elongation curve of the cord obtained at room temperatures (25 ºC plus/minus 2 ºC), in accordance with the chemical fiber tire cord testing method of JIS L1017.

6. The pneumatic tire (1) according to any one of claims 1 to 5, wherein the ply tape (19) has a width (W1) of from 2 to 10 mm.

7. The pneumatic tire (1) according to claim 6,
wherein the ply tape (19) has a width (W1) of from 4 to 6 mm.

8. A method for manufacturing a pneumatic tire (1) which comprises a carcass (6) extending between bead portions (4, 4) through a tread portion (2) and sidewall portions (3, 3), a belt layer (7) comprising a belt ply (7A) disposed radially outward of the carcass (6) in the tread portion (2) and a band layer (9) comprising a band ply (9A) disposed radially outward of the belt layer (7), the method comprising:
a belt ply forming step (K2) to form a belt ply (7A) by arranging a plurality of narrow rectangular ply pieces (17P) spaced from one another in a circumferential direction of the tire (1) on a former, each of the rectangular ply pieces (17P) having a certain length and comprising an arrangement body of a plurality of belt cords (7C) covered with rubber; and
a band ply forming step (K3) to form a band ply (9A) by spirally winding a narrow ribbon shaped ply tape (19) comprising at least one band cord (9C) covered with rubber in the circumferential direction of the tire (1) on the belt ply (7A), the band cord (9C) comprising a composite cord (32) that comprises a first strand (30) and a second strand (31) which are twisted together,
**characterized in that**
the first strand (30) is made of high modulus organic fibers and the second strand (31) is made of low modulus organic fibers and is finer than the first strand, wherein
as the high modulus organic fibers aramid fibers, polyethylene terephthalate fibers and polyethylene naphthalate fibers can be employed, and
as the low modulus fibers, nylon fibers, polyester fibers and vinylon fibers can be employed, wherein
the tread portion (2) is provided with circumferentially and continuously extending main grooves (14) and a land portion (15) separated by the main grooves (14), and a band cord density of a radially inner region of the main grooves (14) is smaller than a band cord density of a radially inner region of the land portion (15).

9. The method for manufacturing a pneumatic tire (1) according to claim 8,
wherein the former (21) comprises a rigid core (20) for molding an inner surface of the tire (1), and the method further comprising a vulcanization step to vulcanize a green tire (1A) between the rigid core (20) and an outer mold (25) for molding an outer surface of the tire (1) without receiving substantial stretch.

## Patentansprüche

1. Luftreifen (1) mit:
einer Karkasse (6), die sich zwischen Wulstabschnitten (4, 4) durch einen Laufflächenabschnitt (2) und Seitenwandabschnitte (3, 3) erstreckt,
einer Gürtelschicht (7) mit einer Gürtellage (7A), die radial außerhalb der Karkasse (6) in dem Laufflächenabschnitt (2) angeordnet ist, und
einer Bandschicht (9) mit einer Bandlage (9A), die radial außerhalb der Gürtelschicht (7) angeordnet ist;
wobei die Gürtellage (7A) aus einer Vielzahl von schmalen rechteckigen Lagenstücken (17P) ausgebildet ist, die in einer Umfangsrichtung des Reifens (1) voneinander beabstandet sind, wobei jedes der rechteckigen Lagenstücke (17P) eine bestimmte Länge hat und einen Anordnungskörper aus einer Vielzahl von Gürtelkorden (7C) aufweist, die mit Kautschuk überzogen sind; und
wobei die Bandlage (9A) aus einem schmalen bandförmigen Lagenband (19) ausgebildet ist, das spiralförmig in der Umfangsrichtung des Reifens (1) gewickelt ist, wobei das Lagenband (19) mindestens einen mit Kautschuk überzogenen Bandkord (9C) aufweist,
**dadurch gekennzeichnet, dass**
der Bandkord (9C) einen Verbundkord (32) umfasst, der einen ersten Strang (30) und einen zweiten Strang (31) umfasst, die miteinander verdrillt sind, wobei der erste Strang (30) aus organischen Fasern mit einem hohen Modul hergestellt ist, und wobei der zweite Strang (31) aus organischen Fasern mit einem niedrigen Modul hergestellt ist und feiner als der erste Strang (30) ist, wobei
als organische Fasern mit einem hohem Modul Aramidfasern, Polyethylenterephthalatfasern und Polyethylennaphthalatfasern verwendet werden können, und
als Fasern mit einem niedrigem Modul Nylonfasern, Polyesterfasern und Vinylonfasern verwendet werden können, wobei
der Laufflächenabschnitt (2) mit sich in Umfangsrichtung und kontinuierlich erstreckenden Hauptrillen (14) und einem durch die Hauptrillen (14) getrennten Stegabschnitt (15) bereitgestellt ist, und eine Bandkorddichte eines radial inneren Bereichs der Hauptrillen (14) kleiner ist als eine Bandkorddichte eines radial inneren Bereichs des Stegabschnitts (15).

2. Luftreifen (1) gemäß Anspruch 1,
wobei die organischen Fasern mit einem hohem Modul Aramidfasern sind und die organischen Fasern mit einem niedrigem Modul Nylonfasern sind.

3. Luftreifen (1) gemäß Anspruch 1 oder 2,
wobei der Bandkord (9C) aus einer Vielzahl von ersten Strängen (30) und einem einzigen zweiten Strang (31) besteht.

4. Luftreifen (1) gemäß einem der Ansprüche 1 bis 3,
wobei die Gürtellage (7A) Spalte (Dc) aufweist, die gleich oder kleiner als 3,1 mm zwischen in Umfangsrichtung benachbarten rechteckigen Lagenstücken (17P) an einem Reifenäquator liegen.

5. Luftreifen (1) gemäß einem der Ansprüche 1 bis 4,
wobei der Bandkord (9C) eine mittlere Dehnung von weniger als 3,0 % aufweist, wobei die mittlere Dehnung die Dehnung (%) bei einer Last von 66 N auf einer bei Raumtemperaturen (25°C plus/minus 2°C) erhaltenen Längsdehnungskurve des Kords gemäß dem chemischen Reifenfaserprüfverfahren des JIS L1017 bedeutet.

6. Luftreifen (1) gemäß einem der Ansprüche 1 bis 5,
wobei das Lagenband (19) eine Breite (W1) von 2 bis 10 mm aufweist.

7. Luftreifen (1) gemäß Anspruch 6,
wobei das Lagenband (19) eine Breite (W1) von 4 bis 6 mm aufweist.

8. Verfahren zur Herstellung eines Luftreifens (1), der eine Karkasse (6), die sich zwischen Wulstabschnitten (4, 4) durch einen Laufflächenabschnitt (2) und Seitenwandabschnitte (3, 3) erstreckt, eine Gürtelschicht (7) mit einer Gürtellage (7A), die radial außerhalb der Karkasse (6) in dem Laufflächenabschnitt (2) angeordnet ist, und eine Bandschicht (9) mit einer Bandlage (9A), die radial außerhalb der Gürtelschicht (7) angeordnet ist, umfasst, wobei das Verfahren umfasst
einen Gürtellagenausbildungsschritt (K2), um eine Gürtellage (7A) durch Anordnen einer Vielzahl von schmalen rechteckigen Lagenstücken (17P), die in einer Umfangsrichtung des Reifens (1) voneinander beabstandet sind, auf einem Former auszubilden, wobei jedes der rechteckigen Lagenstücke (17P) eine bestimmte Länge aufweist und einen Anordnungskörper aus einer Vielzahl von Gürtelkorden (7C) umfasst, die mit Kautschuk bedeckt sind; und
einen Bandlagenbildungsschritt (K3), um eine Bandlage (9A) durch spiralförmiges Wickeln eines schmalen bandförmigen Lagenbandes (19), das mindestens einen mit Kautschuk bedeckten Bandkord (9C) umfasst, in der Umfangsrichtung des Reifens (1) auf die Gürtellage (7A) auszubilden, wobei
der Bandkord (9C) einen Verbundkord (32) umfasst, der einen ersten Strang (30) und einen zweiten Strang (31) umfasst, die miteinander verdrillt sind,
**dadurch gekennzeichnet, dass**
der erste Strang (30) aus organischen Fasern mit einem hohen Modul besteht und der zweite Strang (31) aus organischen Fasern mit einem niedrigen Modul besteht und feiner ist als der erste Strang, wobei
als organische Fasern mit einem hohen Modul Aramidfasern, Polyethylenterephthalatfasern und Polyethylennaphthalatfasern verwendet werden können, und
als Fasern mit einem niedrigen Modul Nylonfasern, Polyesterfasern und Vinylonfasern verwendet werden können, wobei
der Laufflächenabschnitt (2) mit sich in Umfangsrichtung und kontinuierlich erstreckenden Hauptrillen (14) und einem durch die Hauptrillen (14) getrennten Stegabschnitt (15) bereitgestellt ist, und eine Bandkorddichte eines radial inneren Bereichs der Hauptrillen (14) kleiner ist als eine Bandkorddichte eines radial inneren Bereichs des Stegabschnitts (15).

9. Verfahren zur Herstellung eines Luftreifens (1) gemäß Anspruch 8,
wobei der Former (21) einen starren Kern (20) zum Formen einer inneren Oberfläche des Reifens (1) umfasst, und das Verfahren ferner einen Vulkanisationsschritt umfasst, um einen Reifenrohling (1A) zwischen dem starren Kern (20) und einer äußeren Form (25) zum Formen einer äußeren Oberfläche des Reifens (1) zu vulkanisieren, ohne eine wesentliche Streckung zu erhalten.

## Revendications

1. Pneumatique (1) comprenant :
une carcasse (6) s'étendant entre des parties de talon (4, 4) en passant par une partie de bande de roulement (2) et des parties de paroi latérale (3, 3), une couche de ceinture (7) comprenant un pli de ceinture (7A) disposé radialement vers l'extérieur de la carcasse (6) dans la partie de bande de roulement (2) et une couche de bande (9) comprenant un pli de bande (9A) disposé radialement vers l'extérieur de la couche de ceinture (7) ;
le pli de ceinture (7A) étant formé avec une pluralité de pièces de pli rectangulaires étroites (17P) espacées les unes des autre dans une direction circonférentielle du pneu (1), chacune des pièces de pli rectangulaires (17P) ayant une certaine longueur et comprenant un corps d'agencement d'une pluralité de câbles de ceinture (7C) recouverts avec du caoutchouc ; et
le pli de bande (9A) étant formé avec une bande de pli en forme de ruban étroit (19) enroulée en spirale dans la direction circonférentielle du pneu (1), la bande de pli (19) comprenant au moins un câble de bande (9C) recouvert avec du caoutchouc,
**caractérisé en ce que** :
le câble de bande (9C) comprend un câble composite (32) qui comprend un premier brin (30) et un second brin (31) qui sont torsadés ensemble, dans lequel le premier brin (30) est réalisé avec des fibres organiques à module élevé, et dans lequel le second brin (31) est réalisé avec des fibres organiques à faible module et est plus fin que le premier brin (30), dans lequel :
en tant que fibres organiques à module élevé, on peut utiliser des fibres d'aramide, des fibres de polyéthylène téréphtalate et des fibres de polyéthylène naphtalate, et
en tant que fibres à faible module, on peut utiliser des fibres de nylon, des fibres de polyester et des fibres de vinylon, dans lequel :
la partie de bande de roulement (2) est prévue avec des rainures principales (14) s'étendant de manière circonférentielle et continue et une partie d'appui (15) séparée par les rainures principales (14), et une densité de câble de bande d'une région radialement interne des rainures principales (14) est inférieure à une densité de câble de bande d'une région radialement interne de la partie d'appui (15).

2. Pneumatique (1) selon la revendication 1,
dans lequel les fibres organiques à module élevé sont des fibres d'aramide, et les fibres organiques à faible module sont des fibres de nylon.

3. Pneumatique (1) selon la revendication 1 ou 2,
dans lequel le câble de bande (9C) se compose d'une pluralité de premiers brins (30) et d'un seul second brin (31).

4. Pneumatique (1) selon l'une quelconque des revendications 1 à 3,
dans lequel le pli de ceinture (7A) présente des espaces (Dc) égaux ou inférieurs à 3,1 mm entre des pièces de pli rectangulaires (17P) circonférentiellement adjacentes au niveau d'un équateur du pneu.

5. Pneumatique (1) selon l'une quelconque des revendications 1 à 4,
dans lequel le câble de bande (9C) a un allongement intermédiaire inférieur à 3,0 %, l'allongement intermédiaire signifiant l'allongement (%) à une charge de 66N sur la courbe charge - allongement du câble obtenue à température ambiante (25°C plus/mois 2°C), selon le procédé d'essai de câble de pneu de fibres chimiques de JIS L1017.

6. Pneumatique (1) selon l'une quelconque des revendications 1 à 5,
dans lequel la bande de pli (19) a une largeur (W1) de 2 à 10 mm.

7. Pneumatique (1) selon la revendication 6,
dans lequel la bande de pli (19) a une largeur (W1) de 4 à 6 mm.

8. Procédé pour fabriquer un pneumatique (1) qui comprend une carcasse (6) s'étendant entre des parties de talon (4, 4) en passant par une partie de bande de roulement (2) et des parties de paroi latérale (3, 3), une couche de ceinture (7) comprenant un pli de ceinture (7A) disposé radialement vers l'extérieur de la carcasse (6) dans la partie de bande de roulement (2) et une couche de bande (9) comprenant un pli de bande (9A) disposé radialement vers l'extérieur de la couche de ceinture (7), le procédé comprenant :
une étape de formage de pli de ceinture (K2) pour former un pli de ceinture (7A) en agençant une pluralité de pièces de pli rectangulaires étroites (17P) espacées les unes des autres dans une direction circonférentielle du pneu (1) sur un formeur, chacune des pièces de pli rectangulaires (17P) ayant une certaine longueur et comprenant un corps d'agencement d'une pluralité de câbles de ceinture (7C) recouverts avec du caoutchouc ; et
une étape de formage de pli de bande (K3) pour former un pli de bande (9A) en enroulant en spirale une bande de pli en forme de ruban étroit (19) comprenant au moins un câble de bande (9C) recouvert avec du caoutchouc dans la direction circonférentielle du pneumatique (1) sur le pli de ceinture (7A), le câble de bande (9C) comprenant un câble composite (32) qui comprend un premier brin (30) et un second brin (31) qui sont torsadés ensemble,
**caractérisé en ce que** :
le premier brin (30) est réalisé avec des fibres organiques à module élevé et le second brin (31) est réalisé avec des fibres organiques à faible module et est plus fin que le premier brin, dans lequel :
en tant que fibres organiques à module élevé, on peut utiliser des fibres d'aramide, des fibres de polyéthylène téréphtalate et des fibres de polyéthylène naphtalate, et
en tant que fibres à faible module, on peut utiliser des fibres de nylon, des fibres de polyester et des fibres de vinylon, dans lequel :
la partie de bande de roulement (2) est prévue avec des rainures principales (14) s'étendant de manière circonférentielle et continue et une partie d'appui (15) séparée par les rainures principales (14), et une densité de câble de bande d'une région radialement interne des rainures principales (14) est inférieure à une densité de câble de bande d'une région radialement interne de la partie d'appui (15).

9. Procédé pour fabriquer un pneumatique (1) selon la revendication 8,
dans lequel le formeur (21) comprend un noyau rigide (20) pour mouler une surface interne du pneu (1), et le procédé comprenant en outre une étape de vulcanisation pour vulcaniser un pneu cru (1A) entre le noyau rigide (20) et un moule externe (25) pour mouler une surface externe du pneu (1) sans recevoir d'étirement sensible.
